# DEMANDE DE BREVET EUROPEEN

(11) **EP 0 753 813 A1**
(43) Date de publication de la demande: **15.01.1997**
(21) Numéro de dépôt: 96401505.1
(22) Date de dépôt: 09.07.1996
(51) Int. Cl.: G06F 9/46

(54) **Procédé d'ordonnancement de tâches apériodiques**

(30) Priorité: 11.07.1995 FR 9508393
(71) Demandeur: CEGELEC, 92300 Lavallois Perret (FR)
(72) Inventeur: Herz, Dominique, 94240 L'Hay les Roses (FR)
(74) Mandataire: Sciaux, Edmond

(57) **Abrégé**

Le procédé pour ordonnancer l'exécution de tâches apériodiques d'un système temps réel consiste à allouer pendant une durée de service prédéterminée et renouvelable (Cs), un haut niveau de priorité aux tâches apériodiques qui requièrent une exécution de façon à diminuer leur temps de réponse. La durée du service de tâches apériodiques est configurée à partir des durées d'exécution respectives des tâches apériodiques du système temps réel pour réduire encore plus les temps de réponse des tâches apériodiques. Cette durée de service (Cs) est renouvellée de façon pseudo-périodique (61,71) à sa pleine capacité. Elle est maintenue jusqu'à ce qu'une tâche apériodique soit activée et est consommée pendant le service de cette tâche apériodique (50).

## Description

L'invention concerne un procédé pour ordonnancer l'exécution de tâches apériodiques d'un système temps réel.

Un système temps réel comprend des tâches dites périodiques qui sont exécutées périodiquement et qui ont des échéances de terminaison dures (correspondant chacune à la fin d'une période d'exécution), par exemple des tâches d'acquisition de données provenant d'instruments de mesure. L'ordonnancement de l'exécution de tâches périodiques est classiquement réalisé en assignant aux tâches périodiques des niveaux de priorité fixes respectifs, le niveau de priorité d'une tâche périodique ayant une certaine période de récurrence étant inversement proportionnel à cette période de récurrence. En d'autres termes, les niveaux de priorité des tâches apériodiques sont proportionnels à 1/Pi ou Pi est une période de récurrence d'une tâche périodique. Cette attribution de niveau de priorité est connue sous le nom de "Rate Monotonic Scheduling". Elle permet de garantir un respect des échéances de terminaison des tâches périodiques.

Un système temps réel peut aussi comprendre des tâches dites apériodiques qui requièrent une exécution à des intervalles de temps irréguliers et qui ont des échéances de terminaison souples, par exemple des tâches gérant la communication avec un utilisateur. L'ordonnancement de l'exécution de tâches apériodiques est très différent de celui des tâches périodiques.

L'article intitulé "Apériodic Task Sckeduling for Hard-Real-Time Systems" de Brinkley Sprunt & al. publié en 1989 dans le document "The Journal of Real-Time Systems" expose différents procédés pour ordonnancer l'exécution de tâches apériodiques d'un système temps réel. Ces procédés sont connus sous le nom de "serveurs de tâches apériodiques". Ils consistent à allouer pendant une durée prédéterminée et renouvelable, dite durée du service de tâches apériodiques, un haut niveau de priorité aux tâches apériodiques qui requièrent une exécution de façon à diminuer leurs temps de réponse par rapport à ceux que l'on obtiendrait si ces tâches apériodiques étaient exécutées comme des tâches de fonds pendant les périodes de laxité du système temps réel.

Dans l'article mentionné ci-dessus, il est fait référence plus particulièrement à trois types de serveur de tâches apériodiques qui sont le serveur ajournable ("Deferrable Serveur" indiqué par la suite par DS), le serveur sporadique ("Sporadic Serveur" indiqué par la suite par SS) et le serveur à scrutation ("Polling Serveur" indiqué par la suite par PS). Comme indiqué ci-dessus, le service de tâches apériodiques ne peut avoir lieu que pendant une certaine durée limitée pour ne pas menacer le respect des échéances de terminaison dures des tâches périodiques. A chaque fois que la durée du service de tâches apériodiques est épuisée, les tâches apériodiques en activité retrouvent un niveau bas de priorité et sont exécutées le cas échéant en tâches de fond. Cette durée du service de tâches apériodiques est renouvelée cycliquement pour servir de nouvelles requêtes d'exécution de tâches apériodiques.

L'efficacité d'un serveur de tâches apériodiques se mesure principalement sur les temps de réponse moyens des tâches apériodiques qu'il permet d'obtenir pour une certaine configuration du système temps réel et une certaine utilisation de la ressource d'exécution par les tâches périodiques.

Les caractéristiques d'un serveur de tâches apériodiques sont définies par les paramètres suivants:
Cs: durée du service de tâches apériodiques à haut niveau de priorité;
Ps: durée du cycle de renouvellement de la durée du service (le cycle pouvant être périodique ou pseudo-périodique).

Le rapport Cs/Ps correspond à un certain degré d'utilisation de la ressource d'exécution du système temps réel qui varie entre 0 et 1 appelé par la suite charge du serveur Us.

La charge maximale Us admissible du serveur dépend du degré d'utilisation de la ressource d'exécution par les tâches périodiques du système temps réel qui est conventionnellement représenté par le paramètre Up appelé par la suite charge des tâches périodiques. Différentes équations ont été proposées pour déterminer le paramètre Us en fonction du paramètre Up (voir le document indiqué ci-dessus). Le paramètre Up est un paramètre du système temps réel. Up est égal à la somme des rapports Ci/Pi ou Ci représente la durée d'exécution d'une tâche périodique i et Pi représente la période de récurrence de la tâche périodique i considérée.

Jusqu'à présent, un serveur de tâches apériodiques est toujours configuré de façon à avoir le plus haut niveau de priorité du système temps réel suivant l'attribution dite "Rate Monotonic Scheduling". Autrement dit, les paramètres de configuration Ps et Cs du serveur sont déterminés de telle façon que le paramètre Ps soit plus petit que la plus petite période de récurrence Pi d'une tâche périodique du système temps réel.

Comme indiqué ci-dessus, l'utilisation d'un serveur de tâches apériodiques permet d'obtenir une diminution notable des temps de réponse des tâches apériodiques.

Un but de l'invention est d'améliorer encore plus l'efficacité d'un serveur de tâches apériodiques.

Un autre but de l'invention est de proposer un serveur de tâches apériodiques qui est simple à implémenter et qui induit une faible surcharge en ligne.

A cet effet, l'invention a pour objet un procédé pour ordonnancer l'exécution de tâches apériodiques d'un système temps réel, consistant à allouer pendant une durée prédéterminée et renouvelable, dite durée du service de tâches apériodiques, un haut niveau de priorité aux tâches apériodiques qui requièrent une exécution de façon à diminuer leur temps de réponse. Selon l'invention, ladite durée du service de tâches apériodiques est configurée à partir des durées d'exécution respectives des tâches apériodiques du système temps réel. En d'autres termes, le paramètre déterminant pour configurer un serveur de tâches apériodiques selon l'invention est le paramètre Cs et non le paramètre Ps.

Plus particulièrement, la durée maximale du service de tâches apériodiques est choisie de façon à être sensiblement égale à la valeur moyenne des durées d'exécution respectives des tâches apériodiques du système temps réel.

Avantageusement, le procédé pour ordonnancer l'exécution de tâches apériodiques selon l'invention est tel que la durée du service de tâches apériodiques est à chaque fois renouvelée à sa pleine capacité après qu'un service de tâches apériodiques ait été réalisé, le renouvellement étant différé d'une certaine période de temps prédéterminée commençant à partir du début du dernier service de tâches apériodiques réalisé, la capacité de service étant maintenue jusqu'à ce qu'une tâche apériodique soit activée et remise à zéro quand l'activité apériodique cesse.

Un exemple de réalisation de l'invention est décrit ci-dessous en référence aux dessins.

La figure 1 est un graphique montrant des courbes comparatives de temps de réponse de tâches apériodiques pour différents types de serveur incluant celui proposé selon l'invention.

La figure 2 illustre, par différents diagrammes, le comportement des serveurs connus et celui du serveur selon l'invention.

Les figures 3A et 3B illustrent sous la forme d'un organigramme, le fonctionnement du serveur de tâches apériodiques selon l'invention.

Selon l'invention, un serveur de tâches apériodiques est configuré sur la base de sa durée du service de tâches apériodiques Cs. Plus particulièrement, les durées d'exécution des tâches apériodiques qui composent un système temps réel sur lequel intervient le serveur sont préalablement mesurées et la valeur moyenne de ces durées d'exécution sert à fixer la durée du service Cs du serveur.

Dans la mesure où le paramètre Us d'un serveur de tâches apériodiques est fixé à partir du paramètre Up, il vient que le paramètre Ps du serveur est déterminé en fonction du paramètre Cs par la relation Us=Cs/Ps et le niveau haut de priorité H du serveur est déterminé par une relation du type H=1/Ps. A noter que le niveau haut de priorité H du serveur ne correspond pas forcément au plus haut niveau de priorité du système temps réel comme c'est le cas jusqu'à présent.

Des simulations ont été réalisées pour comparer les performances de différents types de serveur (DS,PS,SS) en termes de temps de réponse moyens des tâches apériodiques en fonction de la durée du service Cs du serveur. Pour ces simulations, le système temps réel est composé de neuf tâches périodiques ayant respectivement des périodes de récurrence de 15,18,22,25,28,40,66,200 et 1000 et d'une tâche apériodique dont la durée d'exécution est de 10 et ayant une récurrence d'activation moyenne de 200 (les instants d'activation de la tâche apériodique étant modélisés en utilisant une loi de Poisson). Pour ces simulations, on a choisit un Up=0,7 et Us a été déterminé à partir de l'équation suivante: Us = 0,8 - Up, soit Us=0,1.

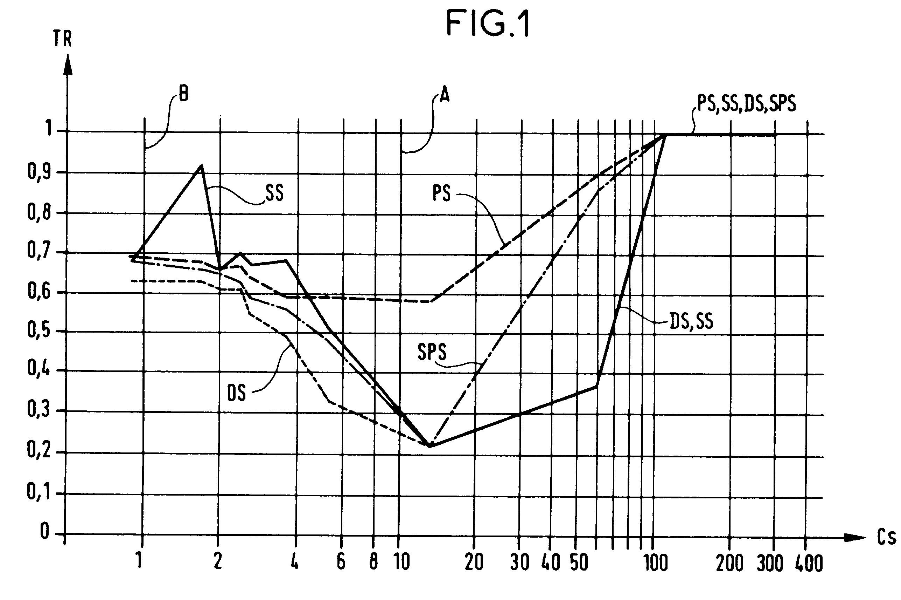

Sur la figure 1, l'axe des abscisses représente la durée du service Cs du serveur qui varie de 0 à 400 et l'axe des ordonnées représente le temps de réponse moyen de la tâche apériodique indiqué par TR, ce temps de réponse étant rapporté sur le temps de réponse de cette tâche apériodique quand elle est exécutée en tâche de fond. En d'autres termes, le temps de réponse moyen équivalent à une exécution en tâche de fond a une valeur de 1 sur l'axe des ordonnées du graphique. Une amélioration de ce temps de réponse par rapport à une exécution en tâche de fond correspond à une valeur inférieure à 1 sur l'axe des ordonnées.

Sur le graphique, trois courbes se rapportent à des simulations réalisées avec les serveurs SS,PS et DS respectivement. Comme visible sur le graphique, ces trois courbes se rapprochent de l'ordonnée 0 quand la durée du service Cs est proche de 10, c'est-à-dire quand Cs est sensiblement égal à la durée d'exécution de la tâche apériodique. Cette valeur de Cs est indiquée par le trait vertical A. Pour cette configuration des serveurs SS,PS et DS, on obtient des temps de réponse moyens de l'ordre de 0,2.

La valeur de Cs quand les serveurs SS,PS et DS sont configurés classiquement pour avoir le plus haut niveau de priorité est indiquée par le trait vertical B. On obtient pour cette configuration, des temps de réponse pour l'ensemble des serveurs qui sont proches de 0,7. L'efficacité des serveurs est par conséquent moins bonne que dans le cas où ils sont configurés à partir de Cs. L'amélioration obtenue est de l'ordre d'un facteur 3.

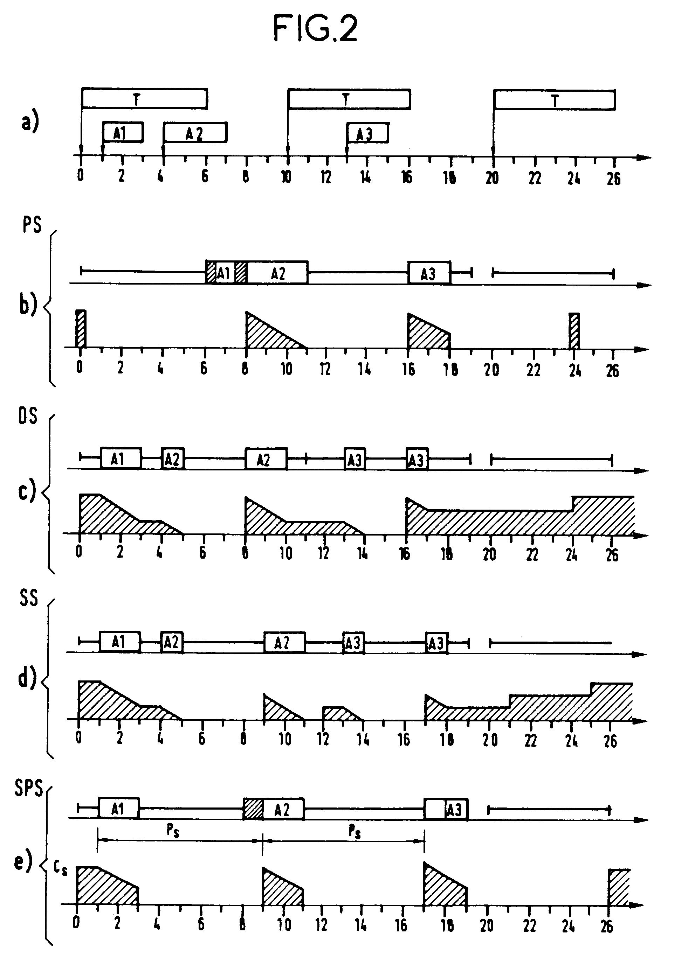

La figure 2 illustre le comportement des serveurs SS,PS et DS et d'un nouveau serveur de tâches apériodiques qui a une faible complexité d'implémentation, qui induit une faible surcharge en ligne et qui a une grande efficacité en termes de temps de réponse des tâches apériodiques. Ce nouveau serveur est appelé par la suite serveur SPS ("Sporadic Polling Serveur").

Sur la figure 2, un exemple de système temps réel comprenant une tâche périodique T (durée d'exécution de 6 et période de récurrence de 10) et trois tâches apériodiques A1,A2 et A3 (respectivement de durée d'exécution de 2,3,2) est montré sur le diagramme a). Les comportements respectifs des serveurs PS,DS,SS et SPS sont montrés respectivement sur les diagrammes b) à e). Chaque serveur est configuré avec un Cs égal à 3 et un Ps égal à 8. Sur les diagrammes b) à e):
- l'ordonnancement de l'exécution des tâches est montrée sur un premier axe horizontal: l'exécution de la tâche périodique T est représentée par une ligne, tandis que l'exécution d'une tâche apériodique est représentée par un rectangle, la partie grisée du rectangle correspondant à une exécution en tâche de fond.
- le cycle de renouvellement de la durée du service est montré sur un second axe horizontal.

Comme visible sur la figure 2, avec le serveur SPS, une tâche apériodique peut être servie à l'instant de sa requête d'exécution (tâche A1) à la différence du serveur PS qui ne peut servir les requêtes d'exécution de tâches apériodiques qu'à des instants prédéterminés. Pour le serveur SPS, le temps de service disponible n'est pas préservée après la terminaison des tâches apériodiques à servir (à la différence des serveurs DS et SS) et le renouvellement de la durée du service a lieu à pleine capacité et seulement après une période de service de tâches apériodiques.

Les performances du serveur SPS sont proches de celles du serveur SS comme visible sur la figure 1 (courbe SPS).

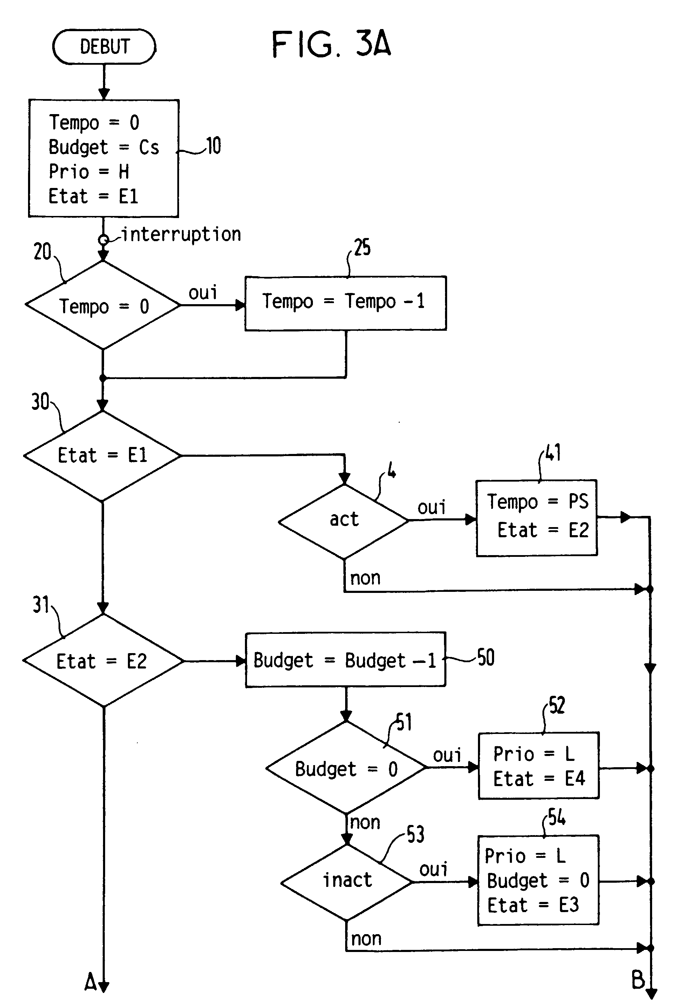

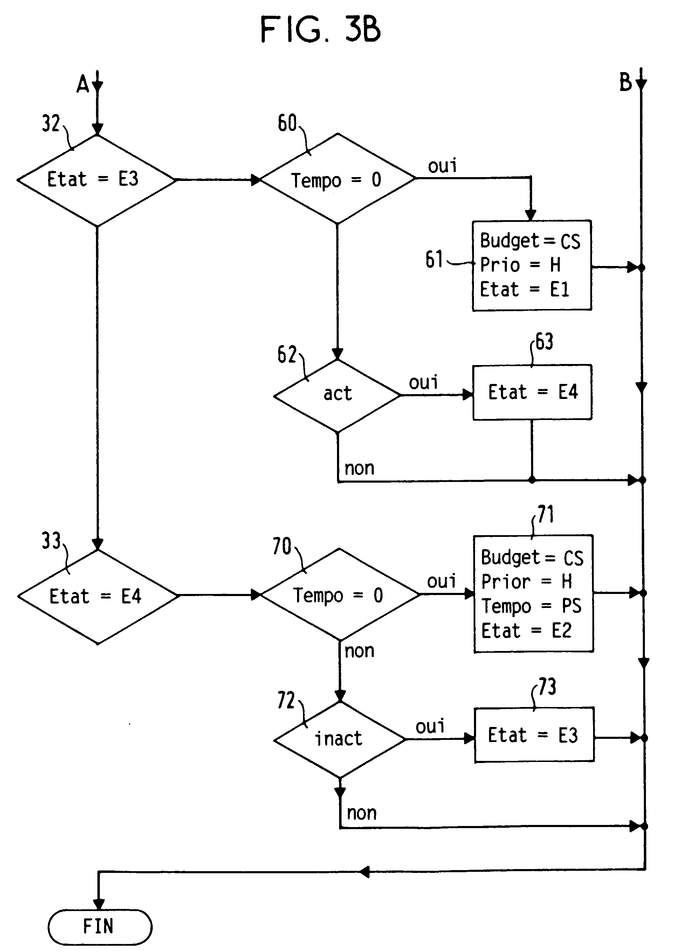

Le fonctionnement du serveur SPS est illustré sur les figures 3A et 3B sous la forme d'un organigramme détaillé. Pour simplifier, dans les blocs de l'organigramme, la variable "Budget" représente le temps disponible du service à haut niveau de priorité, la variable "Prio" représente le niveau courant de priorité alloué aux tâches apériodiques, la variable "Tempo" représente la durée d'un cycle courant de renouvellement de la durée du service et la variable "Etat" représente l'état courant du serveur qui fonctionne comme un automate à états finis.

Au démarrage en 10, le serveur est à un haut niveau de priorité (Prio=H). Ici H est calculé à partir de la relation H=(0,8-Up)/Cs. Le temps disponible du service à haut niveau de priorité H est fixé à la durée maximale du service Cs (Budget=Cs). Le serveur est dans un état "attente de service" (Etat=E1). Le renouvellement de la durée du service n'est pas déclenché (Tempo=0).

Après le démarrage, le serveur est activé périodiquement. L'exécution commence à partir du bloc de contrôle 20. En 20, le déclenchement d'un cycle de renouvellement ou la terminaison d'un cycle de renouvellement sont contrôlés (tempo=0). Si un cycle de renouvellement a été déclenché antérieurement, la durée du cycle de renouvellement est diminuée en 25 (tempo=tempo-1). Le temps de service (budget) est maintenu jusqu'à ce qu'une tâche apériodique soit activée.

L'état dans lequel se trouve le serveur est contrôlé pour effectuer le renouvellement du temps de service.

En 30, si le serveur est dans l'état "attente de service" (Etat=E1), la présence d'une activité de tâches apériodiques est contrôlée en 40 (la présence d'une activité apériodique signifie qu'au moins une tâche apériodique requiert une exécution ou est en attente d'exécution). Si la présence d'une activité apériodique est détectée, un cycle de renouvellement est déclenché (Tempo=Ps) et le serveur passe dans un état "en service" (Etat=E2) en 41.

En 31, si le serveur est dans l'état "en service", le temps disponible du service à haut niveau de priorité est diminué en 50. Puis le temps disponible de service est contrôlé en 51. S'il est épuisé, le service à haut niveau de priorité est suspendu (Prio=1) en 52 et le serveur passe dans un état "hors service avec présence d'activité apériodique" (Etat=E4). Sinon, l'absence d'activité apériodique est contrôlé en 53. Si une absence d'activité apériodique est détectée, le service à haut niveau de priorité est suspendu (Prio=L) en 54, le temps disponible du service à haut niveau de priorité n'est pas préservé (Budget=0) et le serveur passe dans un état "hors service avec absence d'activité apériodique" (Etat=E3).

En 32, si le serveur est dans l'état "hors service avec absence d'activité apériodique" (Etat=E3), la terminaison du cycle courant de renouvellement de la durée du service est contrôlée en 60. Dans le cas où le cycle de renouvellement arrive à échéance (Tempo=0), la durée du service est renouvelée à pleine capacité (Budget=Cs) en 61, le niveau de priorité des tâches apériodiques est fixé au niveau haut (Prio=H) et le serveur passe dans l'état "en attente de service" (bloc 61). Dans le cas où le cycle de renouvellement n'est pas arrivé à échéance, la présence d'une activité apériodique est contrôlée en 62. Si la présence d'une activité apériodique est détectée, le serveur passe en 63 dans l'état "hors service en présence d'activité apériodique" (Etat=E4).

En 33, si le serveur est dans un état "hors service en présence d'activité apériodique" (Etat=E4), la terminaison du cycle courant de renouvellement de la durée du service est contrôlée en 70. Dans le cas où le cycle de renouvellement arrive à échéance (Tempo=0), la durée du service est renouvelée à pleine capacité (Budget=Cs) en 71, le niveau de priorité des tâches apériodiques est fixé au niveau haut (Prio=H), un nouveau cycle de renouvellement est déclenché (Tempo=Ps) et le serveur passe dans l'état "en service" (Etat=E2). Dans le cas où le cycle de renouvellement n'est pas arrivé à échéance, l'absence d'une activité apériodique est contrôlée en 72. Si l'absence d'une activité apériodique est détectée, le serveur passe en 73 dans l'état "hors service en l'absence d'activité apériodique" (Etat=E3).

Par conséquent, le renouvellement de la durée de service est lié à l'activité apériodique passée.

Par ailleurs, la durée du service est toujours renouvelée à pleine capacité ce qui simplifie considérablement l'implémentation du serveur SPS et induit une faible surcharge en ligne. Le renouvellement de la durée du service est pseudo-périodique, la pseudo-période étant Ps.

## Revendications

1. Un procédé pour ordonnancer l'exécution de tâches apériodiques (A1,A2,A3) d'un système temps réel, consistant à allouer pendant une durée prédéterminée et renouvelable (Cs), dite durée du service de tâches apériodiques, un haut niveau de priorité (H) aux tâches apériodiques qui requièrent une exécution de façon à diminuer leur temps de réponse, caractérisé en ce que ladite durée du service de tâches apériodiques est configurée à partir des durées d'exécution respectives des tâches apériodiques du système temps réel.

2. Le procédé selon la revendication 1, dans lequel la durée du service de tâches apériodiques est sensiblement égale à la valeur moyenne des durées d'exécution respectives des tâches apériodiques du système temps réel.

3. Le procédé selon l'une des revendications 1 ou 2, dans lequel la durée du service de tâches apériodiques (Cs) est à chaque fois renouvelée à sa pleine capacité après qu'un service de tâches apériodiques ait été réalisé, le renouvellement étant différé d'une certaine période de temps (Ps) prédéterminée commençant à partir du début du dernier service de tâches apériodiques réalisé, la capacité de service étant maintenue jusqu'à ce qu'une tâche apériodique soit activée et remise à zéro quand l'activité apériodique cesse.
